# EUROPEAN PATENT SPECIFICATION

(11) **EP 2 066 477 B1**
(45) Date of publication and mention of the grant of the patent: **12.02.2014**
(21) Application number: 06796206.8
(22) Date of filing: 10.10.2006
(51) Int. Cl.: B25B 11/00, B23Q 3/15

(54) **AN ELECTRO PERMANENT MAGNETIC WORK HOLDING SYSTEM WHICH CLAMPS FERROMAGNETIC WORK PIECE(S) AND SIMULTANEOUSLY SENSES DISPLACEMENT**
ELEKTRO-DAUERMAGNET-WERKSTÜCKHALTESYSTEM, DAS EIN ODER MEHRERE FERROMAGNETISCHE WERKSTÜCKE EINKLEMMT UND GLEICHZEITIG EINE VERSCHIEBUNG ERFASST
SYSTÈME DE MAINTIEN DE PIÈCE ÉLECTROMAGNÉTIQUE PERMANENT CONÇU POUR FIXER PAR SERRAGE UNE OU PLUSIEURS PIÈCES FERROMAGNÉTIQUES ET POUR DÉTECTER SIMULTANÉMENT UN DÉPLACEMENT

(30) Priority: 13.09.2006 IN CA09252006
(43) Date of publication of application: 10.06.2009
(73) Proprietor: Sarda, Uttam, Kolkata 700064 (IN)
(72) Inventor: Sarda, Uttam, Kolkata 700064 (IN)
(74) Representative: Gahlert, Stefan
(86) International application number: PCT/IN2006/000405
(87) International publication number: WO 2008/032333

(56) References cited:
- EP-A1- 0 345 554
- WO-A1-99/08293
- WO-A2-03/009972
- US-A- 4 237 455

## Description

The present invention relates to an electro permanent magnetic work holding system which clamps ferromagnetic work piece(s) and simultaneously senses displacement. More particularly this invention relates to an electro permanent magnetic work holding system, hereinafter called EPM system in this specification, which can hold ferromagnetic work piece(s) magnetically and can also sense any displacement of work piece(s) by using its electrical winding(s) as search coil(s) of the EPM work holder in operation. The subject invention also provides a method for operating the system aforesaid.

Electro Permanent Magnetic (EPM) work holding system of flux reversal type have been known in which a magnetic circuit is activated or deactivated by reversing the polarity of the permanent magnet(s) of the device. This is a combination of permanent magnetic and electro magnetic devices: it presents the advantages of the latter without the disadvantages of the former. These devices use intrinsic energy of the permanent magnetic device, but instead of being switched "ON" or "OFF" mechanically, it requires electrical pulse similar to electro magnetic devices but only momentarily delivered by an electrical winding(s). Once switched "ON", these devices provide magnetic force for infinite duration of time independent of any external energy source. Thus these can be used for clamping during work holding operation, quick changing of dies, anchoring of jobs while transportation from one place to another to name just a few.

One of the main drawbacks of such work holding system is that it could not detect displacement of work piece(s) on its own and it was always a cause of worry during work holding operations. Displacement of work piece(s) occurs when the force acting on the work piece(s) is more than the magnetic force acting on it by the work holding apparatus.

A few illustrative prior Patents are given below which are indicative of the area of interest.

US Patent No. 4,237,455 by Philip Beckley discloses a safety device for a work holding apparatus having a sensor means responsive to flux produced by the device in the magnetic circuit including the job, a transducer responsive to the holding tension produced by the device together with a signal translation circuit effective to compare signals from the sensor and from the transducer and to provide an output indicative of a safety margin between holding tension and the field available for holding.

US Patent No. 6,104,270 by Gregory E. Elias discloses a work holding apparatus comprising of a magnetic sensor arranged close to the base of the ferromagnetic core and a further magnetic sensor arranged over said permanent magnet(s) so as to measure substantially only the magnetic flux passing through the reversible magnet(s) as well as a safety device for processing the signals transmitted by the magnetic sensor and obtaining the working point of the device on the magnetization curve of the reversible magnet.

US Patent No. 6,154,353 by Edward Normal Bowers discloses a magnetic work holding apparatus having sensor(s) on the electrical winding to detect the magnetic field of permanent magnet in the object and provide signals to a control circuit, which applies current to the electrical winding to attract the object when the detected field is below a predetermined limit.

US Patent No. 6,636,153 B1 by Simon C. Barton discloses a sensor system for determining acceptable magnetization between a magnetic clamp and a mold patent for quick mold change system on an injection molding.

The systems discussed above address specific problems and attempt to provide solutions therefore, but the complexity of having a plurality of sensor(s) inside the body of the magnetic apparatus often poses a challenge. Moreover, with the increase in the size of the magnetic surface, more number of sensor(s) needs to be included in the magnetic body, which often presents constructional complications and consequent limitations.

In conventional work holding apparatus, the electrical winding(s) were designed with the objective of providing the requisite Ampere turns to the reversible magnet(s) inside the work holding apparatus for magnetization and/ or demagnetization.

From WO 03/009972 A2 a system for holding ferromagnetic work pieces magnetically according to the preamble of claim 1 is known. The known system uses additional search coils for detecting a displacement of work pieces.

Although this system can, in principle, detect displacement of work pieces, the additional search coils add complexity and cost to the system.

In view of this it is a main object of the invention to disclose an improved system for holding work piece(s) magnetically and simultaneously sensing any displacement thereof.

This object is achieved by a system according to claim 1.

A further object of this invention is to hold work piece(s) on Electro Permanent Magnetic (EPM) system and also sensing any displacement of such work piece(s) without using any additional sensor(s).

A still further object of this invention is to provide an EPM system which is capable of monitoring the holding of the ferromagnetic work piece(s) without addition of any sensor(s).

Another object of this invention is to provide an EPM system wherein the electrical winding(s) of the EPM work holder are designed with adequate number of turns so that it can effectively be used as a sensor, apart from its capability to provide short impulse(s) of electricity.

Yet another object of this invention is to provide a system wherein the electrical winding(s) are used for measuring flux changes when it is not being used to deliver power for magnetization and/ or demagnetization.

Still another object of this invention is to provide a method of detecting any displacement of a work piece(s) held magnetically on an EPM work holder by using the aforementioned system.

The foregoing objects of this invention are achieved by providing an improved system for holding ferro magnetic work piece(s) magnetically and simultaneously sensing any displacement thereof, which comprises an electro permanent magnetic work holder having a plurality of reversible magnet(s) placed thereon and a controller to deliver power to electrical winding(s), characterized in that the electrical winding(s) have adequate number of turns which after magnetization acts as search coil(s) and is connected to displacement monitor circuit provided in the controller for analysis and comparison of the induced signal due to change in magnetic lines of force and generates an error signal output in the event of displacement of the work piece(s).

This invention also relates to a method of detecting any displacement of a work piece(s) held magnetically on an EPM system as defined above, which comprises -
(a) Placing the work piece(s) on the Electro Permanent work holder;
(b) Switching on the Electro Permanent Work holder using its electrical winding(s);
(c) Connecting the electrical winding(s) of the Electro Permanent Magnetic work holder to displacement monitor circuit to act as search coil(s);
(d) Generating induced EMF in the event of any displacement of work piece(s) during work holding operation(s);
(e) Amplifying and filtering the signal generated, analyzing the same and displaying error signal;
(f) Switching off the EPM work holder using its electrical winding(s), and
(g) Removing the work piece(s) from the EPM work holder.

As pointed out earlier, a ferromagnetic work piece(s) are generally held on an EPM system magnetically. Proper positioning of the work piece(s) on the working face of the EPM work holder is important so that displacement, if any, generates maximum changes in magnetic flux ensuring easy detection by the search coil(s).

The electrical winding(s) of the said work holder now plays the role of "search coil", and even the slightest change in the magnetic flux generates induced EMF in the electrical winding(s) of the EPM work holding device. A "search coil" is a coil conductor, usually of known area and number of turns, which is used to measure the flux variation.

The displacement monitor circuit comprises of an amplifier, filter and comparator for generating an error signal when the induced EMF is above the preset sensitivity level.

The electrical winding(s) present in the EPM work holder are put to use only momentarily for switching ON or OFF the work holder; and apart from these functions the electrical winding(s) are being used for recording changes in the magnetic flux, when the electrical winding(s) are not being employed to supply power for magnetization and/ or demagnetization.

The system of the present invention uses the induced voltage generated in electrical winding(s) of EPM work holder and after requisite analysis and comparison of the signal(s); it activates an alarm to signify displacement of the work piece(s) from its originally held position on the working surface of the EPM work holder.

The electrical winding(s) of the EPM work holder of the subject invention are made with adequate number of turns enabling them to be used as an effective sensor in addition to their primary purpose of providing short impulse of electricity. Such increased number of turns imparted to the electrical winding(s) renders them capable of generating same Ampere turns to the reversible magnet(s) inside the work holder for magnetization and/ or demagnetization, and at the same time enable the said electrical winding(s) with larger number of turns to act as a search coil(s) for detecting any displacement of work piece(s) from the optimally held position on the working surface of the EPM work holder, simultaneously obviating the need to use extraneous sensor(s).

A typical example will illustrate the point better. A conventional electrical winding would have around 50 turns and a current of 20 Ampere passing through it would result in 1000 AT (Ampere turn). In the system of the subject invention, there is provided 250 turns and a current of 4 amps. flowing through it would generate same quantum, namely, 1000 AT.

The invention will be further defined by means of the accompanying drawings which are by way of illustration and not by way of limitation, wherein -
Fig.1. shows electro permanent magnetic system;
Fig.2. gives a view of the electro permanent magnetic work holder clamping a work piece(s),
Fig.3. depicts a view of the displaced work piece(s) held on electro permanent magnetic work holder.
Fig.4. Shows in a flow chart the process of the electro permanent magnetic system.

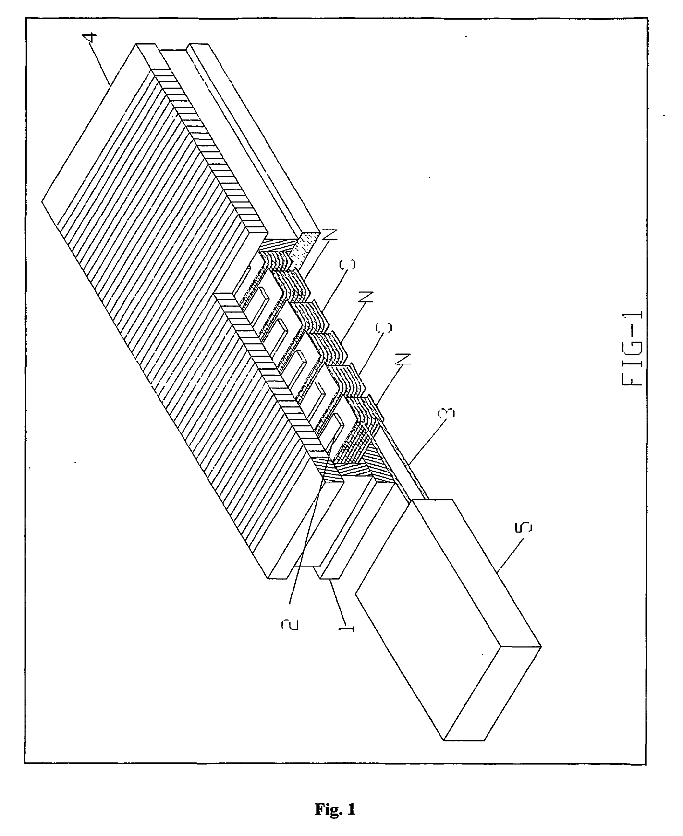

Referring to the aforementioned figures of the drawings, in Fig. 1, Electro Permanent Magnetic Work holder is (1), the reversible magnet(s) is (2), (3) shows the Electrical Winding(s), Working Surface is (4) and the Controller is denoted by (5).

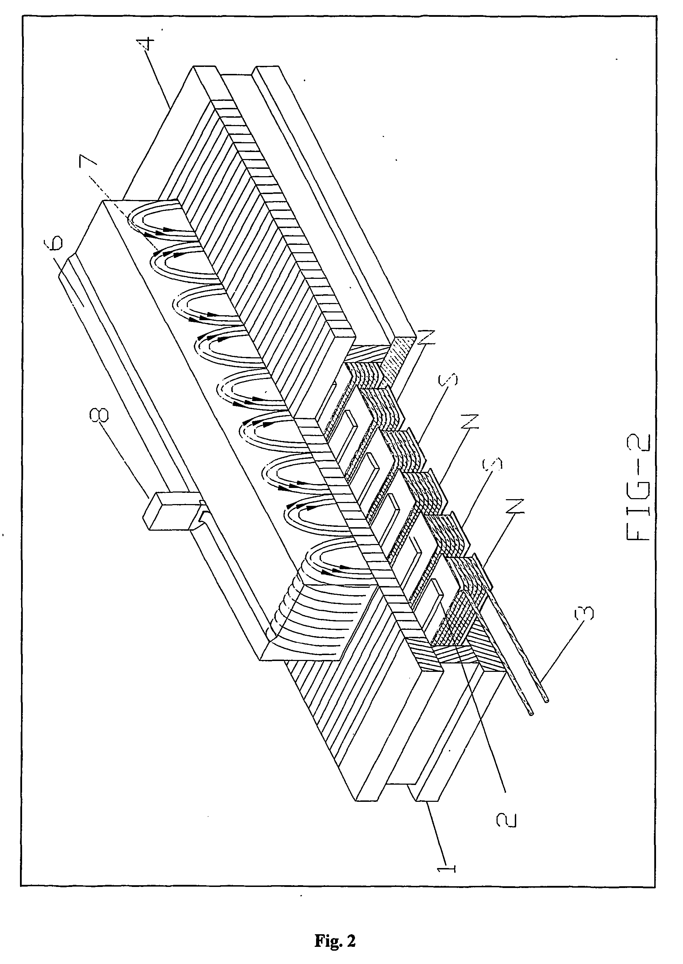

Fig. 2 shows the EPM Work holder (1) holding ferromagnetic work piece(s) (6) magnetically, the magnetic lines of force are shown by (7) and the working tool is (8).

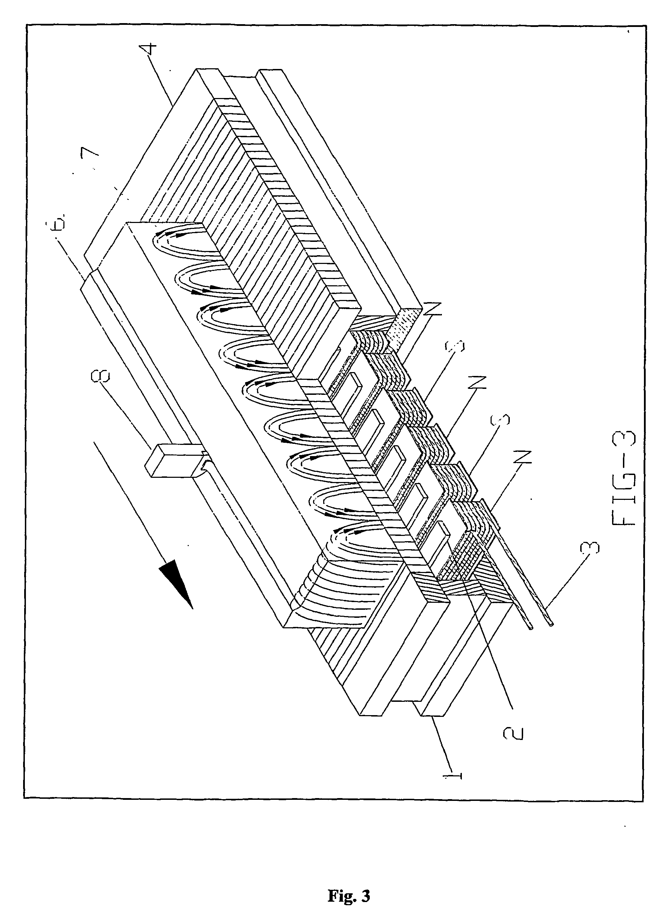

Fig. 3 shows the displaced work piece(s) during work holding operation.

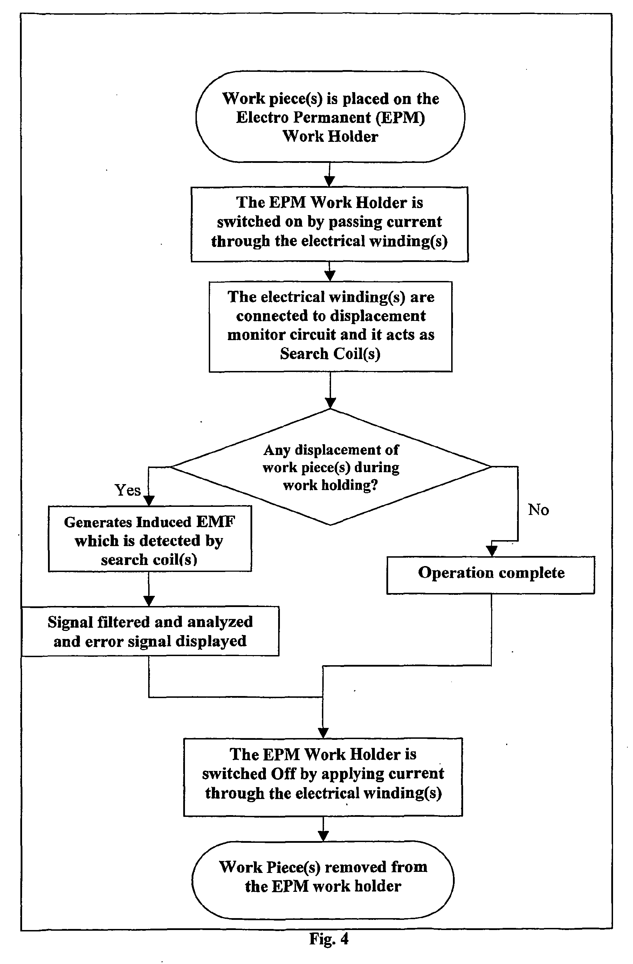

Fig. 4 depicts flow sheet diagram illustrating the different stages of operation of the system of the present invention, including detection of displacement of the work piece(s).

As illustrated in Fig. 1, the power circuit of the controller provides requisite DC voltage. The holding power of the EPM work holder can also be regulated/ controlled by controlling the DC Voltage. Electrical pulse is momentarily applied to the electrical winding(s) for switching the EPM work holder ON.

Thereafter the electrical winding(s) are connected to the 'displacement monitor circuit', which analyses the induced EMF in the electrical winding(s) acting as search coil(s) by filtering, amplifying the signals and in turn gives appropriate alarm signal(s) in case of any displacement of work piece(s) from the originally held position, necessitating correction and/ or readjustment of position for resumption of work holding operation.

The preset sensitivity level of the displacement monitor circuit can be adjusted so that the system rejects unwanted signal(s) which are normally generated during the work holding operation.

Once the work holding is complete, suitable output signal is generated to switch Off the EPM work holder. This is followed by removal of work piece(s) from the EPM work holder.

The advantages and salient features of the system of the present invention may be briefly outlined as under:

It can be employed in any conventional EPM work holding system for improving its performance.

Sensing of displacement is done by a plurality of electrical winding(s), acting as search coil(s), distributed throughout the working surface of the EPM work holder.

Sensing of displacement is made while the work holder is in magnetized condition and the electrical winding(s) are at rest.

Shape and manner of deployment of electrical winding(s) may be tailor made, depending on end use and customer requirement.

Subject system obviates the need to use extraneous sensor(s), thereby rendering it extremely cost effective.

It overcomes the drawback of the prior art which uses extraneous sensor(s), and that too only in specific location(s).

## Claims

1. A system for holding ferromagnetic work piece(s) (6) magnetically and simultaneously sensing any displacement thereof, which comprises an electro permanent magnetic work holder (1) having a plurality of reversible magnet(s) (2) placed thereon and a controller (5) to deliver power to electrical winding(s) (3), wherein the system comprises means for sensing displacement of work piece(s) using search coil(s), **characterized in that** the electrical winding(s) have adequate number of turns which after magnetization acts as search coil(s) and is connected to displacement monitor circuit provided in the controller (5) for analysis and comparison of the induced signal due to change in magnetic lines of force (7) and generates an error signal output in the event of displacement of the work piece(s) (6).

2. A system as claimed in Claim 1 wherein the electrical winding(s) (3) of the electro permanent magnetic work holder (1) are used as search coil(s) and serves as sensor(s) for detecting displacement of work piece(s) placed on electro permanent magnetic work holder (1) for work holding obviating the need to use extraneous sensor(s).

3. A system as claimed in claim 1 and 2 for holding ferromagnetic work piece(s) (6) magnetically and simultaneously sensing displacement which is done by a plurality of electrical winding(s) (3), acting as search coil(s) and distributed throughout the working surface of the electro permanent magnetic work holder (1).

4. A system as claimed in claim 1 to 3 wherein the electrical winding(s) (3) of the electro permanent work holder (1) is used for measuring flux changes when it is not being used to deliver power for magnetization and/ or demagnetization.

5. A system as claimed in claim 1 to 4 wherein the said preset sensitivity level of the system can be adjusted to suit the requirement of the work holding operation.

6. A system as claimed in claim 5 wherein the said displacement monitor circuit comprises of an amplifier, filter and comparator for generating an error signal if the said induced EMF is above the said preset sensitivity level.

7. A method of detecting any displacement of a ferromagnetic work piece(s) (6) held magnetically on an Electro Permanent Magnetic system by using a system as claimed in Claims 1 to 5, which comprises -
(a) Placing the work piece(s) on the electro permanent magnetic work holder (1);
(b) Switching on the electro permanent magnetic work holder (1) using its electrical winding(s) (3);
(c) Connecting the electrical winding(s) (3) of the Electro Permanent Magnetic work holder (1) to displacement monitor circuit to act as search coil(s);
(d) Generating induced EMF in the event of any displacement of work piece(s) (6) during work holding operation(s);
(e) Amplifying and filtering the signal generated, analyzing the same and displaying error signal;
(f) Switching off the electro permanent magnetic work holder (1) using its electrical winding(s) (3), and
(g) Removing the work piece(s) from the electro permanent magnetic work holder (1).

## Patentansprüche

1. System zum Halten von ferromagnetischen Werkstück(en) (6) und zum gleichzeitigen Überwachen einer Verschiebung davon, das einen elektropermanenten magnetischen Werkstückhalter (1) aufweist, mit einer Mehrzahl von reversiblen Magneten (2), die darauf angeordnet sind, und mit einem Controller (5), um Energie zu den elektrischen Wicklungen (3) zu liefern, wobei das System ein Mittel zur Erfassung einer Verschiebung eines oder mehrerer Werkstücke unter Verwendung von Suchspule(n) aufweisen, **dadurch gekennzeichnet, dass** die elektrischen Wicklungen eine adäquate Anzahl von Windungen aufweisen, um nach der Magnetisierung als Suchspule(n) zu wirken und mit einer Verschiebungsüberwachungsschaltung gekoppelt sind, die in dem Controller (5) zur Analyse und zum Vergleich des induzierten Signals in Folge der Veränderung von magnetischen Kraftlinien (7) vorgesehen ist, und die einen Fehlersignal-Output für den Fall erzeugt, dass eine Verschiebung des Werkstücks beziehungsweise der Werkstücke (6) auftritt.

2. System nach Anspruch 1, bei dem die elektrischen Wicklungen (3) des elektropermanentmagnetischen Werkstückhalters (1) als Suchspule(n) verwendet werden und als Sensor(en) zur Erfassung von Verschiebungen des Werkstückes beziehungsweise der Werkstücke auf dem elektropermanent magnetischen Werkstückhalter (1) auf den Werkstückhalter dient beziehungsweise dienen, wodurch die Notwendigkeit zur Verwendung von einem externen Sensor beziehungsweise externen Sensoren überflüssig wird.

3. System nach Anspruch 1 und 2 zum magnetischen Halten von ferromagnetischen Werkstück(en) (6) und zum gleichzeitigen Überwachen einer Verschiebung, was durch eine Mehrzahl von elektrischen Wicklungen (3) erfolgt, die als Suchspulen wirken und über die Arbeitsfläche des elektropermanentmagnetischen Werkstückhalters (1) verteilt sind.

4. System nach Anspruch 1 bis 3, bei dem die elektrische Wicklung(en) (3) des elektropermanentmagnetischen Werkstückhalters (1) verwendet wird, um Flussveränderungen zu messen, wenn sie nicht verwendet wird beziehungsweise werden, um Leistung zur Magnetisierung und/oder Entmagnetisierung zu übertragen.

5. System nach Anspruch 1 bis 4, bei dem der voreingestellte Empfindlichkeitspegel des Systems einstellbar ist, um auf die Erfordernisse des Werkstückhaltevorgangs angepasst zu werden.

6. System nach Anspruch 5, bei dem die Verschiebungsüberwachungsschaltung einen Verstärker, einen Filter und einen Vergleicher umfasst, um ein Fehlersignal zu erzeugen, falls die induzierte EMK oberhalb des voreingestellten Empfindlichkeitspegels liegt.

7. Verfahren zum Detektieren irgendeiner Verschiebung eines ferromagnetischen Werkstücks beziehungsweise von ferromagnetischen Werkstücken (6), das beziehungsweise die magnetisch an einem elektropermanentmagnetischen System gehalten wird beziehungsweise gehalten werden, unter Verwendung eines Systems nach einem der Ansprüche 1 bis 15, mit folgenden Schritten:
a) Platzieren des Werkstücks beziehungsweise der Werkstücke auf dem elektropermanentmagnetischen Werkstückhalter (1);
b) Einschalten des elektropermanentmagnetischen Werkstückhalters (1) unter Verwendung seiner elektrischen Wicklung(en) (3);
c) Verbinden der elektrischen Wicklung(en) (3) des elektropermanentmagnetischen Werkstückhalters (1) mit einer Verschiebungsüberwachungsschaltung, um als Suchspule(n) zu wirken;
d) Erzeugen von induzierter EMK in dem Fall einer Verschiebung des Werkstücks beziehungsweise der Werkstücke (6) während des Werkstückehaltevorgangs beziehungsweise der Werkstückhaltevorgänge;
e) Verstärken und Filtern des erzeugten Signals, Analysieren desselben und Anzeigen eines Fehlersignals;
f) Abschalten des elektropermanentmagnetischen Werkstückhalters (1) unter Verwendung seiner elektrischen Wicklung(en) (3) und
g) Entfernen des Werkstückes beziehungsweise der Werkstücke aus dem elektropermanentmagnetischen Werkstückhalter (1).

## Revendications

1. Système destiné à maintenir des pièce(s) ferromagnétique(s) (6) magnétiquement et détecter simultanément tout déplacement de celles-ci, qui comporte un porte-pièce électromagnétique permanent (1) muni d'une pluralité d'aimants réversibles (2) placés sur celui-ci et d'une commande (5) servant à assurer l'alimentation d'enroulement(s) électrique(s) (3), le système comportant des moyens servant à détecter un déplacement d'une ou de plusieurs pièces à l'aide d'une ou de plusieurs bobines exploratrices, **caractérisé en ce que** l'enroulement / les enroulements électriques comprennent un nombre de spires adéquat qui, après aimantation, agit comme une ou plusieurs bobines exploratrices et est relié à un circuit de contrôle de déplacement incorporé à la commande (5) pour l'analyse et la comparaison du signal induit du fait d'un changement dans les lignes de force magnétiques (7), et génère un sortie de signal d'erreur en cas de déplacement de la / des pièces (6).

2. Système selon la revendication 1, l'enroulement / les enroulements électriques (3) du porte-pièce électromagnétique permanent (1) étant utilisés comme bobine(s) exploratrice(s) et servant de capteur(s) pour détecter un déplacement d'une ou de plusieurs pièces placées sur un porte-pièce électromagnétique permanent (1) servant au bridage, éliminant la nécessité d'utiliser un / des capteurs extérieurs.

3. Système selon la revendication 1 et 2 destiné à maintenir des pièce(s) ferromagnétique(s) (6) magnétiquement et à détecter simultanément un déplacement, ce qui est effectué par une pluralité d'enroulements électriques (3), agissant comme des bobines exploratrices et répartis sur toute la surface de travail du porte-pièce électromagnétique permanent (1).

4. Système selon la revendication 1 to 3, l'enroulement / les enroulements électriques (3) du porte-pièce électromagnétique permanent (1) étant utilisé(s) pour mesurer des variations de flux lorsqu'ils ne sont pas utilisés pour assurer une alimentation en vue de l'aimantation et / ou de la désaimantation.

5. Système selon la revendication 1 à 4, ledit niveau de sensibilité prédéfini du système pouvant être réglé de façon à s'adapter aux exigences de l'opération de bridage.

6. Système selon la revendication 5, ledit circuit de contrôle de déplacement étant constitué d'un amplificateur, d'un filtre et d'un comparateur servant à générer un signal d'erreur si ladite FEM induite est supérieur audit niveau de sensibilité prédéfini.

7. Procédé de détection de tout déplacement d'une ou de plusieurs pièces ferromagnétiques (6) maintenues magnétiquement sur un système électromagnétique permanent en utilisant un système selon les revendications 1 à 5, qui comporte les étapes consistant à
(a) Placer la / les pièces sur le porte-pièce électromagnétique permanent (1) ;
(b) Mettre sous tension le porte-pièce électromagnétique permanent (1) en utilisant son / ses enroulements électriques (3) ;
(c) Relier l'enroulement / les enroulements électriques (3) du porte-pièce électromagnétique permanent (1) à un circuit de contrôle de déplacement pour agir comme des bobine(s) exploratrice(s) ;
(d) Générer une FEM induite en cas d'éventuel déplacement d'une ou de plusieurs pièces (6) pendant l'opération / les opérations de bridage ;
(e) Amplifier et filtrer le signal généré, l'analyser et afficher un signal d'erreur ;
(f) Mettre hors tension le porte-pièce électromagnétique permanent (1) en utilisant son / ses enroulements électriques (3), et
(g) Retirer la / les pièces du porte-pièce électromagnétique permanent (1).
